# EUROPÄISCHE PATENTSCHRIFT

(11) **EP 0 589 035 B1**
(45) Veröffentlichungstag und Bekanntmachung des Hinweises auf die Patenterteilung: **08.05.1996**
(21) Anmeldenummer: 93920534.0
(22) Anmeldetag: 16.03.1993
(51) Int. Cl.: B60R 21/26, F42B 3/04

(54) **GASGENERATOR-SYSTEM**
GAS GENERATOR SYSTEM
DISPOSITIF A GENERATEUR DE GAZ

(30) Priorität: 19.03.1992 DE 4208843; 19.03.1992 DE 4208844
(43) Veröffentlichungstag der Anmeldung: 30.03.1994
(73) Patentinhaber: TEMIC Bayern-Chemie Airbag GmbH, D-84544 Aschau (DE)
(72) Erfinder: SCHMUCKER, Robert, D-85521 Ottobrunn (DE); SIMON, Josef, Victor, D-82140 Olching (DE); FENDT-EDELBERG, Ruth, D-8012 Ottobrunn (DE); HÖGENAUER, Ernst, D-8032 Lochham (DE)
(74) Vertreter: Maute, Hans-Jürgen, Dipl.-Ing.
(86) Internationale Anmeldenummer: EP9300603
(87) Internationale Veröffentlichungsnummer: WO9318940

(56) Entgegenhaltungen:
- FR-A- 2 625 961
- GB-A- 2 257 401
- US-A- 4 131 299
- PATENT ABSTRACTS OF JAPAN vol. 016, no. 391 (M-1298)19. August 1992 & JP-A-04 129 859 (ASAHI CHEM. IND. CO. LTD.) 30. April 1992

## Beschreibung

Die Erfindung betrifft ein Gasgeneratoren - System für eine Kraftfahrzeuginsassen-Schutzvorrichtung, die eine an die Treibstoffkammer anschließende und mit dieser durch Öffnungen verbundenen Filterkammer mit Filtern für den ausströmenden Gasstrom aufweist.

Derartige Gasgenerator-Systeme sind bekannt (siehe z.B. die deutschen Patentschriften 39 21 472, dem Oberbegriff mit Ausnahme einer sichtbaren Verschraubung von Ober- und Unterteil entsprechend, und 39 21 473 der Anmelderin).

Nachteilig an diesen Gasgenerator-Systemen ist jedoch, die Tatsache, daß die Verdrehsicherung, wenn überhaupt vorhanden sehr aufwendig ist und der Anzünder bereits vor der Montage der Gehäuseteile eingebaut werden muß.

Weiterhin ist ein Gasgenerator-System aus der US-A-4 1131 299 bekannt. Bei diesem System wird eine Anzündeeinheit nachträglich im Zentrum des Gasgenerators eingelegt und mittels Schraubverschluß fixiert.

Aufgabe vorliegender Erfindung ist es, von der Basis der Blechbauweise, auf der diese und andere bekannten Gasgeneratoren beruhen, abzugehen und trotzdem die zum Teil gegensätzlichen Forderungen zu erfüllen, nämlich
a) absolute Dichtheit über einen längeren Zeitraum,
b) druckfest für einen hohen Arbeitsdruck und
c) Ausblasen eines im Vergleich zu der Brennkammertemperatur abgekühlten, sauberen Gases aus den Ausblasöffnungen am Umfang.
d) geringes Gewicht
e) niedrige Herstellkosten
f) einfache Verdrehsicherung
Die bevorzugte Anwendung der Erfindung erfolgt bei Gasgeneratoren, die zusammen mit einem Airbag in ein Lenkrad eines Kraftfahrzeugs eingebaut werden, um z.B. einen Fahrer, im Falle eines Aufpralls, nach Zündinitierung von einem verzögerungsempfindlichen Schalter, zu schützen.

Gelöst wird diese Aufgabe durch die im kennzeichnenden Teil des unabhängigen Anspruchs angegebenen Merkmale, wobei ein Gehäuseteil am offenen Ende des hohlen Stammes ein verformbares unteres Ende aufweist, das nach dem Verschrauben mit einem zweiten Gehäuseteil und dem darauffolgenden Einsetzen des Anzünders verformt wird und dadurch zwei Formschlüsse entstehen , wobei der eine den Anzünder fixiert und der andere das erste Gehäuseteil mit dem zweiten zusätzlich verbindet, wodurch die Verschraubung nicht mehr gelöst werden kann.

Vorteilhafte Ausgestaltungen der Erfindung ergeben sich aus den Unteransprüchen.

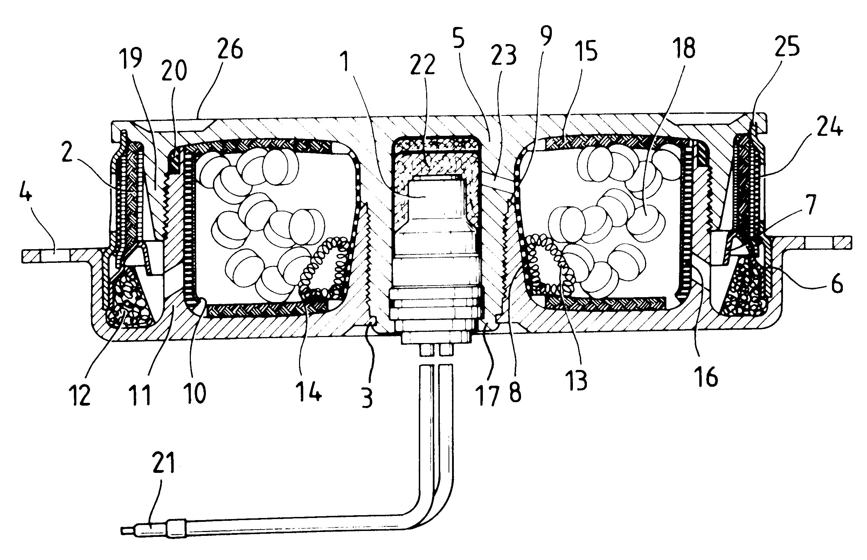

Die beigefügte Zeichnung zeigt ein Ausführungsbeispiel der Erfindung für den oben angegebenen Zweck, ohne hierauf beschränkt zu sein.

Das Gehäuse des Gasgenerators besteht aus einem strukturierten Material, z.B. Leichtmetall Titan oder anderen metallischen oder nichtmetallischen Stoffen, wie Kunststoffen, gegossen, geschwämmt mit Wabenstruktur oder anderer Struktur, mit Hohlräumen nach außen hin abgeschlossen, mit und ohne Faserverstärkung etc. und ist insbesondere im Spritzguß-, Druckguß- oder Fließpreßverfahren hergestellt im wesentlichen durch zwei miteinander durch Verschraubung verbundener Teile 4 und 5, wobei das eine ein Unterteil und das andere ein Oberteil bildet. Das Oberteil 5 ist angenähert pilzförmig, während das Unterteil als schalen- oder wannenförmig ausgebildet bezeichnet werden kann. Das Oberteil 5 hat einen zentralen Stamm, der hohl ist zur nachträglichen Aufnahme einer Anzündeeinheit 1. Diese Anzündeeinheit wird über eine Stecker 21 verbunden mit einer elektrischen Auslöseschaltung, die nach Erkennen eines Aufpralls über einen auf bestimmte Verzögerungen ansprechenden Schalter ein Signal zum Zünden eines elektrischen Anzünders z.B. ein Glühdraht sein kann, der ein Anzündmittel 22 entzündet, das sich in dem Hohlraum des Stammes des Oberteils 5 befindet und seinerseits abgedichtet oder abgepackt sein kann, wie dargestellt, und dessen Verpackung bei einem bestimmten Druck aufreißt, um dann eine Flamme in die Treibstoffkammer für die Tabletten 18 hier ringförmig, an Bohrungen 23 übertreten zu lassen. Diese Zündkette ist nicht auf zwei Treibstoffe beschränkt, sondern es können auch mehrere Stoffe eine solche Zündkette bilden. Das Unterteil hat eine innerste Wanne, gebildet durch Wandteile 8, die den Zentralbereich oder Stamm des Oberteils 5 umfassen und auf diesen mittels Gewinde aufschraubbar ist.

Das Unterteil oder die Schale 4 weist ferner einen weiter außen liegenden Ring mit dem Wandbereich 11 auf, der seinerseits mit einem Wandbereich 19 des Oberteils 5 über Gewinde verschraubbar ist. Das Unterteil oder die Wanne 4 ist ihrerseits peripher außen mittels Schrauben an einer Halterung des Lenkrads befestigbar, ebenfalls gleichzeitig und der Zwischenlage des Airbags als aufblasbaren Sack mit seinem untersten Randbereich.

Die genannten Wandbereiche im Unterteil 4 und Oberteil 5, welche miteinander verschraubt werden, haben nicht nur gemeinsame Gewinde innen und außen, sonder auch auslaufende Spitzen, die sich jeweils in den anderen Teil hineinpressen bzw. an diesen anpressen, ggf. unter Zwischenlage eines deformierbaren Ringes 20, der nach Form, Größe und Material für eine geeignete Abdichtung sorgt. Außerdem sind die Gewindegänge ihrer Steigung, ihrer Ausführungsart so wählbar, daß diese sich fest ineinander verhaken ( Einmalverschraubung ). Die Gewinde können auch wenigstens teilweise selbstschneidend ausgeführt sein. Die miteinander zu verschraubenden Wandbereiche können teilweise federnd oder nachgiebig oder geschlitzt ausgeführt werden, wie z.B. andere Hülsen oder Futter auch. In der Treibstoffkammer ist der Festtreibstoff z.B. in Tablettenform 18 eingefüllt auf Kissen 15, insbesondere einem Keramikfaservlies. Hier könnte auch ein anderes geeignetes temperaturfestes und nachgiebiges Material als Dämpfungskissen 14 oder 15 unten und/oder oben angewandt werden.

Falls die Füllung mit Tabletten nicht vollständig erfolgt oder erfolgen soll, können Metallwolleeinlagen 13 für einen Volumenausgleich sorgen. Mit 16 sind die Auslaß- oder Überstromöffnungen der Treibstoffkammer bezeichnet, welche radial von innen nach außen zum Umfang hin verlaufen, im Querschnitt gesehen jedoch schräg zur Mittelachse angeordnet sind. Die Öffnungen 16 sind so ausgerichtet, daß der Gasstrom aus der Treibstoffkammer direkt auf eine Metallwolle 12 in der Trennkammer auftrifft, in der flüssige und feste Teilchen aus dem Gas abgeschieden werden. Ein Kondensationsbeginn für flüssige Teilchen erfolgt bereits an dem Grobfilter 10 in der Treibstoffkammer vor den Durchtrittsöffnungen 16 gelegen. Die Grobfilter 10 können relativ weitmaschige Siebe, Gitter oder ähnliches sein, bevorzugt nach innen zum Treibstoff hin nochmals abgedeckt mit einem etwas weicheren, feineren oder dgl. Sowohl die Öffnungen 16 für das Überströmen des Gases aus der Treibstoffkammer in die Filter- und Abscheidekammer als auch die Ausblasöffnung 24 können auf ihrer Innenseite von dünnen Berstfolien in an sich bekannter Weise abgedichtet sein, damit von außen keine Feuchtigkeit eindringen kann.

Das Verschrauben der beiden Hauptteile 4 und 5 miteinander geschieht mit Hilfe von Werkzeugaufnahmen 26 am Oberteil 5, um die nötige Kraft für die Verschraubung einzuleiten. Vorher müssen alle Treibstoffe und Filter etc. eingelegt sein, damit alle Teile zwischen den Hauptteilen 4 und 5 mittels der Verschraubung in einem einzigen Arbeitsgang dicht und druckfest eingespannt werden. Die Dichtheit unter Atmosphärendruck beträgt mehrere Jahre und der Berstdruck ist > 300 atm oder 3 x 10⁴ M Pascale.

Mit 7 ist ein Leit- und Führungsblech für die Strömung bezeichnet, welches in der Filterkammer stromabwärts liegt hinter der Öffnung 16 und hinter dem durchströmten Glaswollefilter 12 zum Abscheiden der Partikel und Kondensation von Flüssigkeit an der Oberfläche. Dieses Leitblech 7 ist einerseits zur Umlenkung auch mehrfach und Zwangsführung der Strömung in der Filterkammer geformt und andererseits abströmseitig um einen Kanal zu bilden, der das Gas über die Filterfläche des Feinfilters 2 verteilt.

Dieses Feinfilter 2 ist einerseits am Leitblech 7 anliegend und andererseits in einer Nut 25 am Außenumfang des Oberteils 5 eingeklemmt oder eingebördelt oder andersartig durch Verformung festgehalten nach Einstecken des Filters 2 bei 25. Das Feinfilter 2 liegt andererseits an einem Blech 6 an, mit dessen Ende es in die Nut 25 einsteckbar ist und am anderen Ende in die Wanne 4 einsetzbar ist. Blech 6 und sandwichartiges Metall-/Keramik-Metall-Filter bilden zusammen eine Einheit/Modul 2.

Wie die Zeichnung zeigt, ist der hohle Stamm des Oberteils 5 an seinem unteren Ende 17 verformbar, z.B. mit einem Niet- oder ähnlichen Formwerkzeug. Der Anzünder 1 kann nach Verschrauben der beiden Einzelteile 4 und 5 nachträglich in den noch offenen hohlen Stamm des Oberteils eingesetzt werden. Die Fixierung erfolgt dann mittels Umbördelung vom verformbaren Ende 17 des Oberteils 5 um den Anzünder, der dadurch dicht und fest in den Gasgenerator integriert wird. Auch kann durch eine weitere derartige Befestigung 3 am inneren oder äußeren Ende der Wanne 4 oder des Oberteils 5 erfolgen. Somit sind die Gewinde gegen Aufdrehen geschützt, wobei unter Umständen ein Teil der Gewinde verzichtbar wird, da der zusätzliche Formschluß 3 die Stabilität des Gasgenerator-Systems erhöht.

Die Gewinde können auch auf andere Weise gesichert und abgedichtet werden, z.B. mittels Klebstoff oder anderer Sicherungsmittel an sich bekannter Art, wie Einlagen, Krallen, Stifte etc. und Kontermuttern, z.B. am unteren Ende des Stamms vom Oberteil 5.

Weitere Abhandlungen des Ausführungsbeispiels sind für den Fachmann im Rahmen der Ansprüche ohne weiteres möglich.

## Patentansprüche

1. Gasgenerator-System in Leichtbauweise, insbesondere eines Aufprallschutzsystems für Fahrzeuginsassen, mit einem zentralen Bereich (29) für einen Anzünder (1), eine diesen umschließende Brennkammer für festen Treibstoff (18), welche ihrerseits umgeben ist von einer Filterkammer mit Austrittsöffnungen (24) für das Aufblasen eines nachgeschalteten Verbrauchers, bestehend aus einem Ober- (5) und Unterteil (4), die miteinander verschraubt sind und zwischen sich Anzünder (1), Treibstoff (18) und Filter (12, 2) aufnehmen und festhalten, wobei ein in etwa pilzförmiges Gehäuseteil einen hohlen Stamm (29) oder Kernbereich aufweist, in dem der Anzünder (1) einsetzbar ist, **dadurch gekennzeichnet, daß** das pilzförmige Gehäuseteil am offenen Ende des hohen Stammes (29) ein verformbares unteres Ende (17) aufweist, das nach dem Verschrauben der beiden Gehäuseteile (4, 5) und dem darauffolgenden Einsetzen des Anzünders (1) verformt wird und dadurch zwei Formschlüsse entstehen, wobei der eine den Anzünder fixiert und der andere (3) das Oberteil (5) mit dem Unterteil (4) zusätzlich verbindet, wodurch die Verschraubung nicht mehr gelöst werden kann.

2. Gasgenerator-System nach Patentanspruch 1, **dadurch gekennzeichnet, daß** das pilzförmige Gehäuseteil (5) mit dem zweiten Gehäuseteil (4) sowohl am Umfang des Stammes des ersten Gehäuseteils (5) als auch in einem radial weiter außen liegenden Bereich (19) mit dem zweiten Gehäuseteil (4) verschraubt ist.

3. Gasgenerator-System nach einem der vorhergehenden Ansprüche, **dadurch gekennzeichnet, daß** bei Verschraubung die beiden Gehäuseteile (4, 5) mittels gegenläufiger oder gegensinniger Gewinde oder mit verschiedenen Steigungen/Flanken oder wenigstens mit selbstschneidenden Teilbereichen (19, 29) versehen sind.

4. Gasgenerator-System nach einem der vorhergehenden Ansprüche, **dadurch gekennzeichnet, daß** die Sicherung durch bleibende Verformung von Einlagen (20) oder Teilbereichen (19, 29) der einander zugekehrten Enden der beiden Gehäuseteile (4, 5) erfolgt.

5. Gasgenerator-System nach einem der vorhergehenden Ansprüche, **dadurch gekennzeichnet, daß** der Stamm (29) des etwa pilzförmigen Gehäuseteils (5) in seinem Gewindebereich geschlitzt ist und insbesondere im Querschnitt gesehen Kreuzschlitze aufweist.

6. Gasgenerator-System nach einem der vorhergehenden Ansprüche, **dadurch gekennzeichnet, daß** die zu verschraubenden Gehäuseteile (4, 5) in ihren Gewindeteilen mit Keilflächen (19, 29) versehen sind, die eine bleibende Verformung beim Zusammenschrauben hervorrufen.

7. Gasgenerator-System nach einem der vorhergehenden Ansprüche, **dadurch gekennzeichnet, daß** wenigstens ein Gewindebereich (19, 29) der zu verschraubenden Gehäuseteile (4, 5) mit einem kaltaushärtenden, abdichtenden Kleber gestrichen oder durch Eintauchen beschichtet wird.

8. Gasgenerator-System nach einem der vorhergehenden Ansprüche, **dadurch gekennzeichnet, daß** wenigstens eines der Gehäuseteile (4, 5) eine Sollbruchstelle für den Notfall aufweist.

## Claims

1. Lightweight gas generator system, particularly in a collision protection system for vehicle occupants, with a central region (29) for an igniter (1), a combustion chamber for solid fuel (18) which encloses the igniter and is in turn surrounded by a filter chamber with outlet apertures (24) for the inflation of a consuming device connected downstream, the said system consisting of an upper part (5) and a lower part (4) which are screwed together and which receive and retain between them the igniter (1), the fuel (18) and the filter (12, 2), wherein a housing part which is approximately mushroom-shaped has a hollow stem (29) or core region in which the igniter (1) can be inserted, characterised in that the mushroom-shaped housing part has on the open end of the hollow stem (29) a deformable lower end (17) which is deformed after the screwing of the two housing parts (4, 5) and the subsequent insertion of the igniter (1) and thereby two positive locks are produced, one of which fixes the igniter and the other (3) additionally connects the upper part (5) to the lower part (4) so that the screw connection can no longer be released.

2. Gas generator system according to Claim 1, characterised in that the mushroom-shaped housing part (5) is screwed to the second housing part (4) both on the periphery of the stem of the first housing part (5) and also in a region (19) lying radially further out.

3. Gas generator system according to one of the preceding claims, characterised in that for screwing together the two housing parts (4, 5) have threads running or turning in opposite directions or are provided with different pitches/flanks or at least with self-tapping sections (19, 29).

4. Gas generator system according to one of the preceding claims, characterised in that securing takes place by permanent deformation of inserts (20) or sections (19, 29) of the ends which face one another of the two housing parts (4, 5).

5. Gas generator system according to one of the preceding claims, characterised in that the stem (29) of the approximately mushroom-shaped housing part (5) is slotted in its threaded region and has cross slots particularly when viewed in cross-section.

6. Gas generator system according to one of the preceding claims, characterised in that the housing parts (4, 5) to be screwed together are provided in their threaded parts with wedge surfaces (19, 29) which bring about a permanent deformation when the parts are screwed together.

7. Gas generator system according to one of the preceding claims, characterised in that at least a threaded region (19, 29) of the housing parts (4, 5) which are to be screwed together is painted with a cold-ageing sealing adhesive or is coated by immersion.

8. Gas generator system according to one of the preceding claims, characterised in that at least one of the housing parts (4, 5) has a predetermined breaking point for emergencies.

## Revendications

1. Système de générateur de gaz de construction légère, en particulier d'un système de protection contre l'impact pour occupants d'un véhicule, comprenant une portion centrale (29) pour un allumeur (1), une chambre de combustion entourant cette portion centrale et destinée à recevoir un produit gonflant solide (18), chambre qui est elle-même entourée d'une chambre de filtrage présentant des ouvertures de sortie (24) pour le gonflage d'un dispositif utilisateur prévu à la suite, le système de générateur de gaz comprenant une partie de boîtier supérieure (5) et une partie de boîtier inférieure (4) qui sont réunies par vissage et reçoivent et maintiennent entre elles l'allumeur (1), le produit gonflant (18) et des filtres (12, 2), une partie de boîtier à peu près en forme de champignon possédant une portion centrale ou noyau creux (29) dans lequel peut être placé l'allumeur (1), **caractérisé en ce que** la partie de boîtier en forme de champignon présente, à l'extrémité ouverte du noyau creux (29), une extrémité inférieure déformable (17) qui, après l'assemblage par vissage des deux parties de boîtier (4, 5) et la mise en place consécutive de l'allumeur (1), est déformée, ce qui crée deux liaisons par complémentarité de formes, dont l'une fixe l'allumeur et l'autre (3) produit une liaison supplémentaire entre la partie supérieure (5) et la partie inférieure (4), de sorte que l'assemblage vissé ne peut plus être défait.

2. Système de générateur de gaz selon la revendication 1, **caractérisé en ce que** la partie de boîtier (5) en forme de champignon est assemblée par vissage à la seconde partie de boîtier (4) à la fois sur la périphérie du noyau de la première partie de boîtier (5) et dans une zone (19) située radialement plus à l'extérieur.

3. Système de générateur de gaz selon une des revendications précédentes, **caractérisé en ce que**, pour l'asemblage vissé, les deux parties de boîtier (4, 5) sont pourvues de filetages de sens ou de pas contraires ou de pas/flancs différents ou au moins de portions (19, 29) autotaraudeuses.

4. Système de générateur de gaz selon une des revendications précédentes, caractérisé en ce que le blocage est réalisé par déformation permanente d'inserts (1) ou de portions (19, 29) des extrémités dirigées l'une vers l'autre des deux parties de boîtier (4, 5).

5. Système de générateur de gaz selon une des revendications précédentes, **caractérisé en ce que** le noyau (29) de la partie de boîtier (5) de forme à peu près en champignon est fendu dans sa région filetée et présente en particulier des fentes croisées vues en section.

6. Système de générateur de gaz selon une des revendications précédentes, **caractérisé en ce que** les parties de boîtier (4, 5) à assembler par vissage sont pourvues, dans leurs portions filetées, de surfaces en coin (19, 29) qui provoquent une déformation permanente lorsque ces parties de boîtier sont vissées ensemble.

7. Système de générateur de gaz selon une des revendications précédentes, **caractérisé en ce qu**'au moins une région filetée (19, 29) des parties de boîtier (4, 5) à assembler par vissage est revêtue au pinceau ou par immersion d'une colle durcissant à froid et assurant l'étanchéité.

8. Système de générateur de gaz selon une des revendications précédentes, **caractérisé en ce que** l'une au moins des parties de boîtier (4, 5) présente un point de rupture pour le cas d'urgence.
